# EUROPEAN PATENT APPLICATION

(11) **EP 4 546 439 A1**
(43) Date of publication of application: **30.04.2025**
(21) Application number: 22952508.4
(22) Date of filing: 29.07.2022
(51) Int. Cl.: H01M 4/13, H01M 10/38

(54) **ELECTRODE PLATE AND PREPARATION METHOD THEREFOR, AND RELATED DEVICE**

(71) Applicant: Contemporary Amperex Technology Co., Limited, Ningde, Fujian 352100 (CN)
(72) Inventor: TANG, Zhenguang, Ningde, Fujian 352100 (CN); YANG, Pengjun, Ningde, Fujian 352100 (CN); LI, Shisong, Ningde, Fujian 352100 (CN); SHANG, Hongwu, Ningde, Fujian 352100 (CN)
(74) Representative: Gong, Jinping
(86) International application number: PCT/CN2022/109096
(87) International publication number: WO 2024/021061

(57) **Abstract**

An electrode sheet (311) includes a current collector (36) as well as an insulating layer (37) and an active material layer (38) arranged on the current collector (36) along a first direction, the insulating layer (37) is first formed on the current collector (36), and then the active material layer (38) is formed on the current collector (36), so that an edge portion on one side of the active material layer (38) close to the insulating layer (37) covers a first edge region (371) of the insulating layer (37), thereby effectively avoiding the problem of coating bulging edge caused by migration of the insulating layer (37) to the active material layer (38), which is beneficial to improving processing efficiency and quality of the electrode sheet (311), so as to obtain an electrode sheet (311) with higher final quality.

## Description

### TECHNICAL FIELD

The present application relates to the field of battery technologies, and in particular, to an electrode sheet and a producing method thereof, an electrode assembly, a battery cell, a battery, and a power consumption device.

### BACKGROUND

Energy conservation and emission reduction are the key to the sustainable development of the automotive industry. In this case, electric vehicles have become an important part of the sustainable development of the automotive industry due to their advantages of energy conservation and environmental protection. For the electric vehicles, the battery technology is an important factor for their development.

In the development of battery technology, the quality of an electrode assembly is closely related to the capacity and safety performance of a battery. The quality of an electrode sheet in the electrode assembly is particularly important, and it will directly affect the quality of the electrode assembly. Therefore, how to improve quality of an electrode sheet is an urgent technical problem to be solved in the battery technology.

### SUMMARY

Embodiments of the present application provide an electrode sheet and a producing method thereof, an electrode assembly, a battery cell, a battery, and a power consumption device, which could avoid the problem of coating bulging edge caused by migration of an insulating layer on a current collector to an active material layer, and be beneficial to obtaining an electrode sheet with higher final quality.

In a first aspect, an electrode sheet is provided, including: a current collector as well as an insulating layer and an active material layer located on the current collector; where the active material layer and the insulating layer are arranged along a first direction of the current collector, and an edge portion on one side of the active material layer close to the insulating layer covers a first edge region of the insulating layer.

In the embodiments of the present application, on the current collector, the edge portion on one side of the active material layer close to the insulating layer covers the first edge region of the insulating layer. That is, the insulating layer is first formed on the current collector by coating and drying, and then the active material layer is formed on the current collector, so that the edge portion of the active material layer covers the first edge region of the insulating layer. This can limit the migration of a liquid insulating layer slurry to the active material layer, which could effectively avoid the problem of coating bulging edge caused by migration of the insulating layer to the active material layer, and be beneficial to improving processing efficiency and processing quality of the electrode sheet and obtaining an electrode sheet with higher final quality. In addition, the edge portion on one side of the active material layer close to the insulating layer covers the first edge region of the insulating layer, that is, there is no directly exposed current collector between the active material layer and the insulating layer. This is beneficial to avoiding the phenomenon of puncturing a separator by generating wrinkles at the exposed current collector due to the effect of stress concentration, and is further beneficial to improving the safety of a battery.

In a possible implementation manner, in the first direction, a tab of the current collector is located on one side of the insulating layer away from the active material layer.

In the embodiment of the present application, the insulating layer is located between the tab and the active material layer, which is beneficial to ensuring that the edge of the electrode sheet has good insulation performance, thereby reducing the risk of a short circuit of the battery and improving the safety performance of the battery.

In a possible implementation manner, a second edge region of the insulating layer covers an end region on one side of the tab close to the active material layer.

In the embodiment of the present application, the second edge region of the insulating layer covers the end region on one side of the tab closes to the active material layer, which is beneficial to ensuring the insulation of the position of the tab, so as to be beneficial to ensuring that the edge of the electrode sheet has good insulation performance after the electrode sheet is packaged, thereby reducing the risk of a short circuit of the battery and improving the safety performance of the battery.

In a possible implementation manner, a thickness of the insulating layer ranges from 1µm to 25 µm.

In a possible implementation manner, the thickness of the insulating layer ranges from 2µm to 10µm.

In the embodiment of the present application, the thickness of the insulating layer is set reasonably, which is beneficial not only to ensuring that the insulating layer plays the role of insulation and protection, but also to bending the tab more easily, thereby reducing the space for bending the tab to improve the volumetric energy density of the battery.

In a possible implementation manner, in the first direction, a size of the edge portion ranges from 0 to 5mm.

In the embodiment of the present application, the size of the edge portion of the active material layer in the first direction is set to range from 0 to 5mm, which allows there to be no directly exposed current collector between the active material layer and the insulating layer, and does not occupy more active material regions.

In a possible implementation manner, the electrode sheet further includes a conductive layer, the conductive layer is located between the current collector and the active material layer, and the active material layer completely covers the conductive layer.

In the embodiment of the present application, the conductive layer contains a conductive agent and a binder, and it has relatively high conductivity and bonding, which is beneficial not only to improving the conductivity of the electrode sheet and reducing the internal resistance of the battery, but also to enhancing the adhesion between the active material layer and the current collector.

In a possible implementation manner, in the first direction, a gap is provided between the conductive layer and the insulating layer.

In the embodiment of the present application, the gap is provided between the conductive layer and the insulating layer, which is beneficial to avoiding mutual interference between the insulating layer and the conductive layer in the producing process, so as to ensure that the formed conductive layer and insulating layer play their respective roles.

In a possible implementation manner, in the first direction, a size of the gap ranges from 0.1mm to 4mm.

In a possible implementation manner, in the first direction, the size of the gap ranges from 0.5mm to 1mm.

In the embodiment of the present application, the size of the gap between the conductive layer and the insulating layer is set reasonably, which is beneficial not only to avoiding the mutual interference between the conductive layer and the insulating layer in the producing process, but also to reducing the adverse effects on the internal resistance of the battery and the adhesion between the active material layer and the current collector since the position of the gap lacks the conductive layer.

In a possible implementation manner, a thickness of the conductive layer ranges from 0.5µm to 2µm.

In the embodiment of the present application, the thickness of the conductive layer is set to range from 0.5µm to 2µm, which is beneficial not only to ensuring that the conductive layer plays a role in the electrode sheet, but also to avoiding the reduction of the energy density of the battery caused by the excessive thickness of the conductive layer.

In a possible implementation manner, the insulating layer and the active material layer are sequentially formed on the current collector by coating and drying.

In the embodiment of the present application, the insulating layer is first formed on the current collector by coating and drying, and then the active material layer is formed on the current collector. This can limit the migration of the liquid insulating layer slurry to the active material layer, which could effectively avoid the problem of coating bulging edge caused by migration of the insulating layer to the active material layer, and be beneficial to improving processing efficiency and processing quality of the electrode sheet and obtaining an electrode sheet with higher final quality.

In a possible implementation manner, the insulating layer is formed on the current collector by coating and drying using a micro-gravure coating process.

In the embodiment of the present application, compared with the commonly used die extrusion coating process, the use of micro-gravure coating is beneficial to reducing the thickness of the insulating layer. In this way, the thickness of the insulating layer covering the end region on one side of the tab close to the active material layer is reduced, which makes the tab soft and easier to be bent, and is further beneficial to reducing the space for bending the tab in the process of packaging the battery and increasing the volumetric energy density of the battery.

In a second aspect, a producing method of an electrode sheet is provided, including: coating an insulating layer slurry on a current collector to form an insulating layer after drying; and coating an active material layer slurry on the current collector to form an active material layer after drying, so as to obtain the electrode sheet; where the active material layer and the insulating layer are arranged along a first direction of the current collector, and an edge portion on one side of the active material layer close to the insulating layer covers a first edge region of the insulating layer.

In the embodiment of the present application, the insulating layer is first formed on the current collector by coating and drying, and then the active material layer is formed on the current collector. This can limit the migration of the liquid insulating layer slurry to the active material layer, which could effectively avoid the problem of coating bulging edge caused by migration of the insulating layer to the active material layer, and be beneficial to improving processing efficiency and processing quality of the electrode sheet and obtaining an electrode sheet with higher final quality. In addition, the edge portion on one side of the active material layer close to the insulating layer covers the first edge region of the insulating layer, that is, there is no directly exposed current collector between the active material layer and the insulating layer. This is beneficial to avoiding the phenomenon of puncturing a separator by generating wrinkles at the exposed current collector due to the effect of stress concentration, and is further beneficial to improving the safety of a battery.

In a possible implementation manner, the method further includes: processing, in the first direction, the current collector located on one side of the insulating layer away from the active material layer to form a tab.

In a possible implementation manner, a second edge region of the insulating layer covers an end region on one side of the tab close to the insulating layer.

In a possible implementation manner, a thickness of the insulating layer ranges from 1µm to 25 µm.

In a possible implementation manner, the thickness of the insulating layer ranges from 2µm to 10µm.

In a possible implementation manner, in the first direction, a size of the edge portion ranges from 0 to 5mm.

In a possible implementation, before the coating an active material layer slurry on the current collector, the method further includes: coating a conductive layer slurry on the current collector to form a conductive layer after drying; where the active material layer completely covers the conductive layer.

In a possible implementation manner, in the first direction, a gap is provided between the conductive layer and the insulating layer.

In a possible implementation manner, in the first direction, a size of the gap ranges from 0.1mm to 4mm.

In a possible implementation manner, in the first direction, the size of the gap ranges from 0.5mm to 1mm.

In a possible implementation manner, a thickness of the conductive layer ranges from 0.5µm to 2µm.

In a possible implementation manner, the coating an insulating layer slurry on a current collector to form an insulating layer after drying, includes: coating the insulating layer slurry on the current collector using a micro-gravure coating process, to form the insulating layer after drying.

In the embodiment of the present application, compared with the commonly used die extrusion coating process, the use of micro-gravure coating is beneficial to reducing the thickness of the insulating layer. In this way, the thickness of the insulating layer covering the end region on one side of the tab close to the active material layer is reduced, which makes the tab soft and easier to be bent, and is further beneficial to reducing the space for bending the tab in the process of packaging the battery and increasing the volumetric energy density of the battery.

In a third aspect, an electrode assembly is provided, including: the electrode sheet in the above second aspect or any possible implementation manner of the second aspect.

In a fourth aspect, a battery cell is provided, including: the electrode assembly in the above third aspect or any possible implementation manner of the third aspect; a housing having an opening for accommodating the electrode assembly; and an end cover for closing the opening.

In a fifth aspect, a battery is provided, including: the battery cell in the above fourth aspect or any possible implementation manner of the fourth aspect.

In a sixth aspect, a power consumption device is provided, including: the battery in the fifth aspect or any possible implementation manner of the fifth aspect, the battery being configured to provide electrical energy.

Reference is made to the beneficial effects of the above first aspect for the beneficial effects of the second aspect to the sixth aspect, which will not be repeated redundantly herein.

### BRIEF DESCRIPTION OF THE DRAWINGS

In order to illustrate the technical solutions in the embodiments of the present application more clearly, brief description will be made below to the accompanying drawings required in the embodiments of the present application. Apparently, the accompanying drawings described below are some embodiments of the present application only, and other drawings could be obtained based on these accompanying drawings by those ordinary skilled in this art without creative efforts.
FIG. 1 is a schematic structural diagram of a vehicle according to an embodiment of present application;
FIG. 2 is a schematic diagram of an exploded structure of a battery according to an embodiment of present application;
FIG. 3 is a schematic diagram of a battery cell according to an embodiment of present application;
FIG. 4 is a schematic structural diagram of an electrode sheet according to an embodiment of present application;
FIG. 5 is a top view of FIG. 4;
FIG. 6 is a schematic structural diagram of an electrode sheet according to another embodiment of present application; and
FIG. 7 is a schematic flowchart of a producing method of an electrode sheet according to an embodiment of present application.

In the accompanying drawings, the accompanying drawings are not drawn to actual scale.

### DESCRIPTION OF EMBODIMENTS

Implementation manners of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that unless otherwise illustrated, all technical and scientific terms used herein have the same meanings as those commonly understood by those skilled in the art to which the present application belongs. The terms used are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusions.

In the description of the embodiments of the present application, the technical terms such as "first" and "second" are merely used to distinguish different objects, and shall not be understood as an indication or implication of relative importance or implicit indication of the quantity of indicated technical features, a specific order or primary-secondary relationship.

The phrase "embodiment" mentioned in the present application means that the specific features, structures, or characteristics described with reference to the embodiment may be included in at least one embodiment of the present application. The phrase at various locations in the specification does not necessarily refer to the same embodiment, or an independent or alternative embodiment that is mutually exclusive from another embodiment. Those skilled in the art understand, in explicit and implicit manners, that the embodiments described in the present application may be combined with another embodiment.

In the description of the embodiments of the present application, the term "and/or" is only an association relation describing associated objects, which means that there may be three relations. For example, A and/or B may represent three situations: A exists alone, both A and B exist, and B exists alone. In addition, the character "/" herein generally indicates that the associated objects before and after the character are in an "or" relationship.

In the description of the embodiments of the present application, the term "a plurality of" means two or more (including two). Similarly, "a plurality of groups" means two or more groups (including two groups), and "a plurality of sheets" means two or more sheets (including two sheets).

In the embodiments of the present application, the same reference signs represent the same components, and for the sake of brevity, detailed descriptions of the same components are omitted in different embodiments. It should be understood that the dimensions, such as thickness, length, width, of various components, as well as the dimensions, such as the overall thickness, length and width, of the integrated apparatus in the embodiments of the present application shown in the drawings are only the exemplary description, and should not constitute any limitation to the present application.

In the description of the embodiments of the present application, unless otherwise explicitly specified and defined, the technical terms, such as "installation", "interconnection" and "connection", should be understood in a broad sense; for example, they may be either a fixed connection, or a detachable connection, or an integrated connection; they may be a mechanical connection, or an electrical connection; and they may be a direct connection, or an indirect connection via an intermediate medium, or communication between interiors of two elements or the interactive relationship of two elements. Those of ordinary skill in the art may appreciate the specific meanings of the foregoing terms in the present application according to specific conditions.

In the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is not limited in the embodiments of the present application. A battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for packaging one or more battery cells. The box may avoid liquid or other foreign matters to affect charging or discharging of the battery cell.

The battery cell includes an electrode assembly and an electrolytic solution, and the electrode assembly is composed of a positive electrode sheet, a negative electrode sheet and a separator. At present, in order to prevent a short circuit between the positive and negative electrodes and improve the safety of the battery, an insulating material is often coated on the edge of the positive electrode sheet or the negative electrode sheet to form an insulating layer. In the existing battery, the common producing method of an electrode sheet is mainly: extruding a liquid active material layer slurry and insulating layer slurry respectively through extrusion dies and coating them on a current collector using a die extrusion coating process, then drying the current collector coated with the slurries, heating it for volatilizing to remove a solvent, and finally rolling the dried current collector to form an active material layer and an insulating layer on the current collector, so as to obtain a positive electrode sheet or a negative electrode sheet.

However, in the above producing and processing process, there is a gradient difference in surface tension between the active material layer slurry and the insulating layer slurry due to the different materials used by the two, and the gradient difference in tension is more significant due to the difference in drying rate, which leads to the easy migration of the insulating layer slurry to the active material layer slurry, causing coating bulging edge, thereby resulting in a decrease in processing efficiency and processing quality of the electrode sheet to cause poor final quality of the electrode sheet.

In view of this, an embodiment of the present application provides an electrode sheet. In this electrode sheet structure, on a current collector, an edge portion on one side of an active material layer close to an insulating layer covers a first edge region of the insulating layer. That is, the insulating layer is first formed on the current collector by coating and drying, and then the active material layer is formed on the current collector, so that the edge portion of the active material layer covers the first edge region of the insulating layer. This can limit the migration of a liquid insulating layer slurry to the active material layer, which could effectively avoid the problem of coating bulging edge caused by migration of the insulating layer to the active material layer, and be beneficial to improving processing efficiency and processing quality of the electrode sheet and obtaining an electrode sheet with higher final quality. In addition, the edge portion on one side of the active material layer close to the insulating layer covers the first edge region of the insulating layer, that is, there is no directly exposed current collector between the active material layer and the insulating layer. This is beneficial to avoiding the phenomenon of puncturing a separator by generating wrinkles at the exposed current collector due to the effect of stress concentration, and is further beneficial to improving the safety of a battery.

The electrode sheet described in the embodiments of the present application may be a positive electrode sheet or a negative electrode sheet. The electrode sheet described in the embodiments of the present application is applicable to an electrode assembly, a battery cell, a battery, and a power consumption device using a battery.

The power consumption device may be a vehicle, a mobile phone, a portable device, a notebook computer, a ship, a spacecraft, an electric toy, an electric tool, and the like. The vehicle may be a fuel-powered vehicle, a gas-powered vehicle or a new energy vehicle, and the new energy vehicle may be a battery electric vehicle, a hybrid vehicle, an extended-range vehicle, or the like; the spacecraft includes an airplane, a rocket, a space shuttle, a spaceship, and the like; the electric toy includes a fixed or mobile electric toy, such as a game console, an electric vehicle toy, an electric ship toy, and an electric airplane toy; and the electric tool includes an electric metal cutting tool, an electric grinding tool, an electric assembling tool and an electric railway tool, such as an electric drill, an electric grinder, an electric spanner, an electric screwdriver, an electric hammer, an electric impact drill, an concrete vibrator and an electric planer. The above power consumption device is not specially limited in the embodiments of the present application.

For convenience of description, the following embodiments will be explained by an example that the power consumption device is a vehicle.

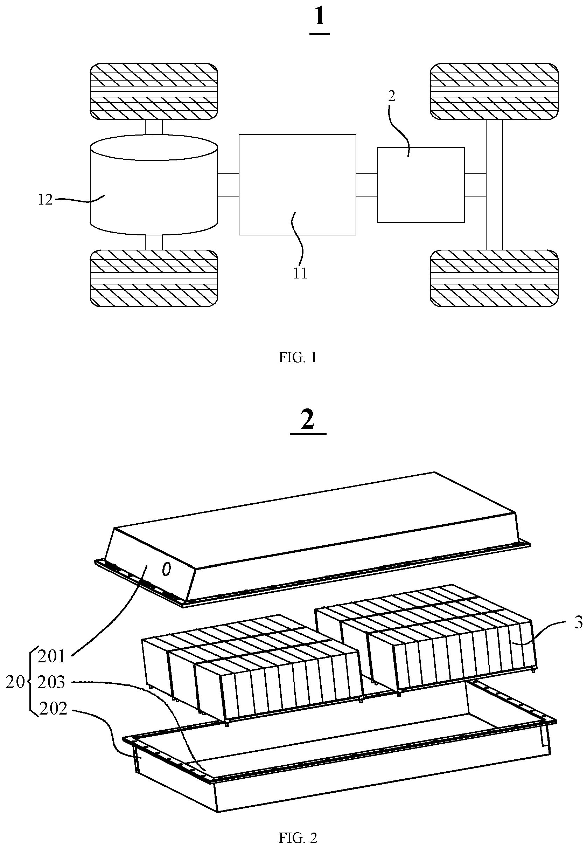

FIG. 1 is a schematic structural diagram of a vehicle 1 provided in an embodiment of present application. As shown in FIG. 1, the vehicle 1 is internally provided with a battery 2, and the battery 2 may be disposed at the bottom, head or tail of the vehicle 1. The battery 2 may be configured to supply power to the vehicle 1. For example, the battery 2 may be used as an operation power supply of the vehicle 1.

The vehicle 1 may further include a controller 11 and a motor 12, and the controller 11 is configured to control the battery 2 to supply power to the motor 12, for example, for a working power demand of the vehicle 1 during startup, navigation and running.

In some embodiments of the present application, the battery 2 may be used not only as an operation power supply of the vehicle 1, but also as a driving power supply of the vehicle 1, replacing or partially replacing fuel or natural gas to provide driving power for the vehicle 1.

FIG. 2 is a schematic exploded view of a battery 2 provided in an embodiment of present application. As shown in FIG. 2, the battery 2 includes a box 20 and a battery cell 3, and the battery cell 3 is accommodated in the box 20.

The box 20 is configured to accommodate the battery cell 3. The box 20 may be a variety of structures. In some embodiments, the box 20 may include a first box part 201 and a second box part 202, the first box part 201 and the second box part 202 are covered with each other, the first box part 201 and the second box part 202 jointly define an accommodating space 203 for accommodating the battery cell 3. The second box part 202 may be a hollow structure with one end open, the first box part 201 is a plate-like structure, and the first box part 201 covers the opening side of the second box part 202 to form the box 20 having the accommodating space 203; or both the first box part 201 and the second box part 202 may be hollow structures with one side open, and the opening side of the first box part 201 covers the opening side of the second box part 202 to form the box 20 having the accommodation space 203. Certainly, the first box part 201 and the second box part 202 may be in various shapes, such as a cylinder, a cuboid.

In order to improve the sealing after the first box part 201 and the second box part 202 are connected, a sealing member may be disposed between the first box part 201 and the second box part 202, such as sealant, a sealing ring.

It is assumed that the first box part 201 covers the top of the second box part 202, the first box part 201 may be referred to as an upper box cover, and the second box part 202 may be referred to as a lower box.

In the battery 2, a plurality of battery cells 3 are provided. The plurality of battery cells 3 may be in series connection, parallel connection or series-parallel connection, and the series-parallel connection means that the plurality of battery cells 3 are connected in series and parallel. The plurality of battery cells 3 may be in direct series connection, parallel connection or series-parallel connection, and then the whole body composed of the plurality of battery cells 3 is accommodated in the box 20. Certainly, it is also possible that the plurality of battery cells 3 are in series connection, parallel connection or series-parallel connection first to form a battery module (not shown in the figure), and multiple battery modules are then in series connection, parallel connection or series-parallel connection to form a whole body, which is accommodated in the box 20. The plurality of battery cells 3 in the battery module can be electrically connected through a bus component, so as to realize parallel connection, series connection or series-parallel connection of the plurality of battery cells 3 in the battery module.

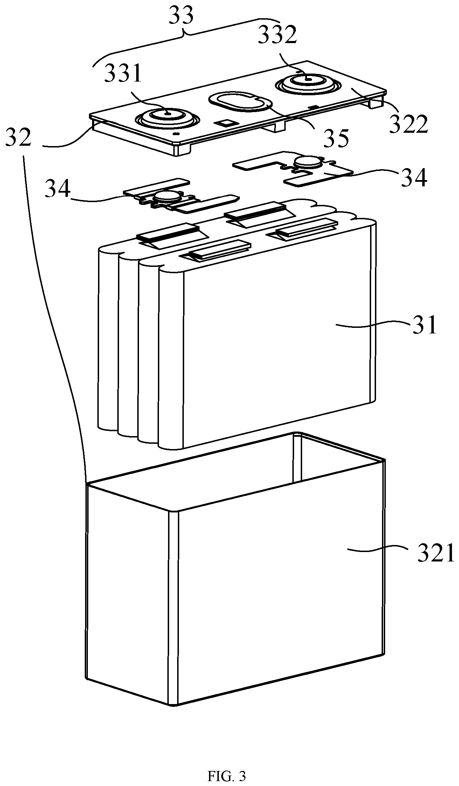

As shown in FIG. 3, FIG. 3 is a schematic structural diagram of a battery cell 3 according to an embodiment of the present application. The battery cell 3 includes one or more electrode assemblies 31, a housing 321, and an end cover 322. The housing 321 and the end cover 322 form a shell or a battery case 32. A wall of the housing 321 and the end cover 322 each are referred to as a wall of the battery cell 3. For a cuboid battery cell 3, walls of the housing 321 include a bottom wall and four side walls. The housing 321 is shaped according to a shape of one or more electrode assemblies 31 after combination. For example, the housing 321 may be a hollow cuboid or cube or cylinder, and one face of the housing 321 has an opening, so that the one or more electrode assemblies 31 can be placed in the housing 321. For example, when the housing 321 is a hollow cuboid or cube, one plane of the housing 321 is a surface with an opening, that is, the plane does not have a wall, so that the inside and outside of the housing 321 are in communication with each other. When the housing 321 may be a hollow cylinder, an end face of the housing 321 is a surface with an opening, that is, the end face does not have a wall, so that the inside and outside of the housing 321 are in communication with each other. The end cover 322 covers the opening and is connected to the housing 321 to form a closed cavity in which the electrode assemblies 31 are placed. The housing 321 is filled with an electrolyte, such as an electrolytic solution.

The battery cell 3 may further include two electrode terminals 33, and the two electrode terminals 33 can be disposed on the end cover 322. The end cover 322 is generally in a shape of a flat plate, and the two electrode terminals 33 are fixed on a flat plate face of the end cover 322. The two electrode terminals 33 are a positive electrode terminal 331 and a negative electrode terminal 332, respectively. Each electrode terminal 33 is correspondingly provided with a connecting member 34 also called as a current collecting member 34, which is located between the end cover 322 and the electrode assembly 31 and configured to electrically connect the electrode assembly 31 to the electrode terminal 33.

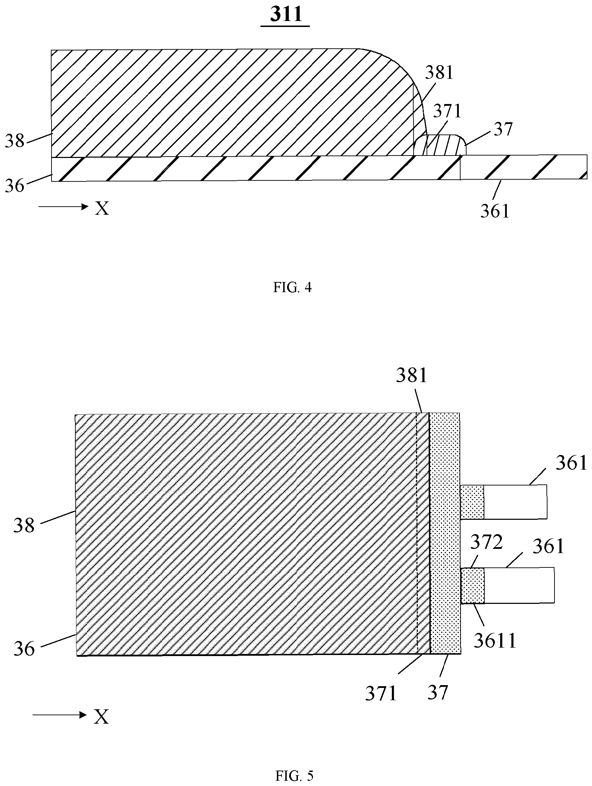

In the battery cell 3, according to actual usage demands, one or more electrode assemblies 31 may be provided. As shown in FIG. 3, 4 independent electrode assemblies 31 are disposed in the battery cell 3.

The battery cell 3 may be further provided with a pressure relief mechanism 35. The pressure relief mechanism 35 is configured to be actuated when an internal pressure or temperature of the battery cell 3 reaches a threshold, to relieve the internal pressure or temperature.

FIG. 4 is a schematic structural diagram of an electrode sheet 311 according to an embodiment of present application. FIG. 5 is a top view of the electrode sheet 311 in FIG. 4.

Referring to FIG. 4 and FIG. 5 together, the electrode sheet 311 may include a current collector 36 as well as an insulating layer 37 and an active material layer 38 located on the current collector 36. The active material layer 38 and the insulating layer 37 are arranged along a first direction X of the current collector 36, and an edge portion 381 on one side of the active material layer 38 close to the insulating layer 37 covers a first edge region 371 of the insulating layer 37.

In the embodiments of the present application, the current collector 36 refers to a component that collects current. In the battery 2, the current collector 36 mainly refers to metal foil, such as copper foil, aluminum foil. The function of the current collector 36 is to collect the current newly generated by the active material in the battery 2 to form larger current output to the outside. Therefore, a metal material with internal resistance as small as possible is generally adopted.

In the embodiments of the present application, the active material layer 38 refers to the material in the battery 2 that can participate in a current generating reaction. The current generating reaction is oxidation and reduction reactions. The oxidation reaction refers to a chemical reaction of losing electrons; and the reduction reaction refers to a chemical reaction of gaining electrons. The active material layer 38 participates in the current generating reaction, that is, the active material on one electrode loses electrons while the active material on the other electrode gains electrons. In the processes of losing and gaining electrons, the electrons generate flow, that is, current.

In the embodiments of the present application, the insulating layer 37 refers to insulating material, such as aluminum oxide, liquid ceramics.

In the above solution, the edge portion 381 on one side of the active material layer 38 on the current collector 36 close to the insulating layer 37 covers the first edge region 371 of the insulating layer 37. That is, the insulating layer 37 is first formed on the current collector 36 by coating and drying, and then the active material layer 38 is formed on the current collector 36, so that the active material layer 38 covers the first edge region 371 of the insulating layer 37. This can limit the migration of a liquid insulating layer slurry to the active material layer 38, which could effectively avoid the problem of coating bulging edge caused by migration of the insulating layer 37 to the active material layer 38, and be beneficial to improving processing efficiency and processing quality of the electrode sheet 311 and obtaining an electrode sheet 311 with higher final quality. In addition, the edge portion 381 on one side of the active material layer 38 close to the insulating layer 37 covers the first edge region 371 of the insulating layer 37, that is, there is no directly exposed current collector 36 between the active material layer 38 and the insulating layer 37. This is beneficial to avoiding the phenomenon of puncturing a separator by generating wrinkles at the exposed current collector 36 due to the effect of stress concentration, and is further beneficial to improving the safety of the battery 2.

Optionally, in the first direction X, a tab 361 of the current collector 36 is located on one side of the insulating layer 37 away from the active material layer 38.

In the above solution, the insulating layer 37 is located between the tab 361 and the active material layer 38, which is beneficial to ensuring that the edge of the electrode sheet 311 has good insulation performance, thereby reducing the risk of a short circuit of the battery 2 and improving the safety performance of the battery 2.

Optionally, a second edge region 372 of the insulating layer 37 may cover a root region 3611 on one side of the tab 361 close to the active material layer 38.

In the above solution, the second edge region 372 of the insulating layer 37 covers the end region 3611 on one side of the tab 361 closes to the active material layer 38, which is beneficial to ensuring the insulation of the position of the tab 361, so as to be beneficial to ensuring that the edge of the electrode sheet 311 has good insulation performance after the electrode sheet 311 is packaged, thereby reducing the risk of a short circuit of the battery 2 and improving the safety performance of the battery 2.

Optionally, a thickness of the insulating layer 37 ranges from 1µm to 25µm, for example, it may be 1µm, 4µm, 7µm, 10µm, 13µm, 20µm, 25µm, or the like, which is not limited in the present application.

Further, the thickness of the insulating layer 3 ranges preferably from 2µm to 10µm, for example, it may be 2µm, 4µm, 6µm, 8µm , 10µm, or the like, which is not limited in the present application.

In the embodiments of the present application, since the second edge region 372 of the insulating layer 37 covers the root region 3611 of the tab 361, the smaller the thickness of the insulating layer 37, the more favorable the tab 361 is to present a soft state, so that the tab 361 is bent more easily, thereby reducing the space for bending the tab. However, when the thickness of the insulating layer 37 is too small, for example, when the thickness of the insulating layer 37 is less than 1µm, the insulating layer 37 may not be able to play the role of insulation and protection.

In the above solution, the thickness of the insulating layer 37 is set reasonably, which is beneficial not only to ensuring that the insulating layer 37 plays the role of insulation and protection, but also to bending the tab 361 more easily, thereby reducing the space for bending the tab to improve the volumetric energy density of the battery 2.

It should be understood that in the embodiments of the present application, the energy density of the battery 2 refers to a ratio of the energy that can be charged to the mass or volume of the energy storage medium for a given electrochemical energy storage apparatus. The ratio of the energy that can be charged to the mass of the energy storage medium is mass energy density with a unit of W·h/kg; and the ratio of the energy that can be charged to the volume of the energy storage medium is volumetric energy density with a unit of W·h/L, and the energy storage medium is the active material.

Optionally, in the first direction X, a size of the edge portion 381 ranges from 0 to 5mm, for example, it may be 0, 1cm, 1.5cm, 2cm, 3cm, 3.5cm, 4cm, or the like, which is not limited in the present application.

In the embodiments of the present application, the edge portion 381 on one side of the active material layer 38 close to the insulating layer 37 covers the first edge region 371 of the insulating layer 37, which is mainly to ensure that there is no directly exposed current collector 36 between the active material layer 38 and the insulating layer 37 to avoid the phenomenon of puncturing a separator by generating wrinkles at the exposed current collector 36 due to the effect of stress concentration. However, at the same time, since the edge portion 381 covers the first edge region 371 of the insulating layer 37, it causes that the active material in this region cannot be used, resulting in a decrease in the energy density of the battery 2.

In the above technical solution, the size of the edge portion 381 of the active material layer 38 in the first direction X is set to range from 0 to 5mm, which can ensure that there is no directly exposed current collector 36 between the active material layer 38 and the insulating layer 37, does not occupy more active material regions, and is beneficial to avoiding the decrease in the energy density of the battery 2 caused by the unavailability of the active material.

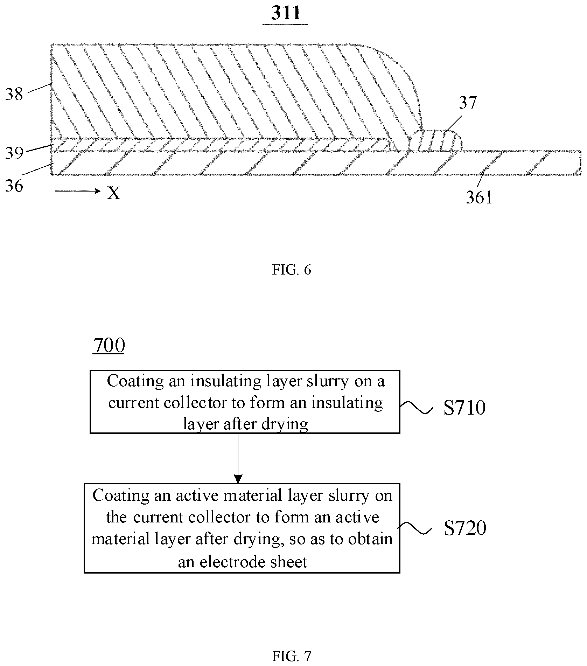

FIG. 6 is a schematic structural diagram of an electrode sheet 311 according to another embodiment of present application.

As shown in FIG. 6, optionally, the electrode sheet 311 may further include a conductive layer 39. The conductive layer 39 can be located between the current collector 36 and the active material layer 38, and the active material layer 38 completely covers the conductive layer 39.

In the above solution, the conductive layer 39 contains a conductive agent and a binder, and thus it has relatively high conductivity and bonding, which is beneficial not only to improving the conductivity of the electrode sheet 311 and reducing the internal resistance of the battery 2, but also to enhancing the adhesion between the active material layer 38 and the current collector 36.

Optionally, in the first direction X, a gap is provided between the conductive layer 39 and the insulating layer 37.

In the above solution, the gap is provided between the conductive layer 39 and the insulating layer 37, which is beneficial to avoiding mutual interference between the insulating layer 37 and the conductive layer 39 in the producing process, so as to ensure that the formed conductive layer 39 and insulating layer 37 play their respective roles.

Optionally, in the first direction X, a size of the gap between the conductive layer 39 and the insulating layer 37 ranges from 0.1mm to 4mm, for example, it can be 0.1mm, 0.5mm, 1mm, 1.5mm, 2mm, 3mm, 4mm, or the like, which is not limited in the present application.

Further, the size of the gap between the conductive layer 39 and the insulating layer 37 ranges preferably from 0.5mm to 1mm, for example, it can be 0.5mm, 0.6mm, 0.7mm, 0.9mm, 1mm, or the like, which is not limited in the present application.

When the gap between the conductive layer 39 and the insulating layer 37 is too small, it is unfavorable to avoiding mutual interference between the insulating layer 37 and the conductive layer 39 in the producing process. When the gap between the conductive layer 39 and the insulating layer 37 is too large, since the gap between the conductive layer 39 and the insulating layer 37 is the directly exposed current collector 36, and this exposed current collector 36 is directly covered by the active material layer 38 and lacks the conductive layer 39, thus, it has adverse effects on the internal resistance of the battery 2 and the adhesion between the active material layer 38 and the current collector 36.

In the above solution, the size of the gap between the conductive layer 39 and the insulating layer 37 is set reasonably, which is beneficial not only to avoiding the mutual interference between the conductive layer 39 and the insulating layer 37 in the producing process, but also to reducing the adverse effects on the internal resistance of the battery 2 and the adhesion between the active material layer 38 and the current collector 36 since the position of the gap lacks the conductive layer 39.

Optionally, a thickness of the conductive layer 39 ranges from 0.5µm to 2µm, for example, it can be 0.5µm, 1µm, 1.5µm, 2µm, or the like, which is not limited in the present application.

In the embodiments of the present application, when the thickness of the conductive layer 39 is too small, it is unfavorable to the conductive layer 39 to play the role. When the thickness of the conductive layer 39 is too large, it results in the reduction of the overall thickness of the active material layer 38, thereby reducing the energy density of the battery 2.

In the above solution, the thickness of the conductive layer 39 is set to range from 0.5µm to 2µm, which is beneficial to ensuring that the conductive layer 39 plays a role in the electrode sheet 311 without reducing the energy density of the battery 2.

The electrode sheet 311 provided in the embodiments of the present application is described above, a method for producing the electrode sheet 311 provided in the embodiments of the present application will be described below, and reference can be made to the foregoing various embodiments for the parts that are not described in detail.

FIG. 7 shows a schematic flowchart of a producing method 700 of an electrode sheet 311 according to an embodiment of present application. As shown in FIG. 7, the method 700 includes:
S710: coating an insulating layer slurry on a current collector 36 to form an insulating layer 37 after drying; and
S720: coating an active material layer slurry on the current collector 36 to form an active material layer 38 after drying, so as to obtain an electrode sheet 311.

The active material layer 38 and the insulating layer 37 are arranged along a first direction X of the current collector 36, and an edge portion 381 on one side of the active material layer 38 close to the insulating layer 37 covers a first edge region 371 of the insulating layer 37.

In the above solution, the insulating layer 37 is first formed on the current collector 36 by coating and drying, and then the active material layer 38 is formed on the current collector 36. This can limit the migration of the liquid insulating layer slurry to the active material layer 38, which could effectively avoid the problem of coating bulging edge caused by migration of the insulating layer 37 to the active material layer 38, and be beneficial to improving processing efficiency and processing quality of the electrode sheet 311 and obtaining an electrode sheet 311 with higher final quality. In addition, the edge portion 381 on one side of the active material layer 38 close to the insulating layer 37 covers the first edge region 371 of the insulating layer 37, that is, there is no directly exposed current collector 36 between the active material layer 38 and the insulating layer 37. This is beneficial to avoiding the phenomenon of puncturing a separator by generating wrinkles at the exposed current collector 36 due to the effect of stress concentration, and is further beneficial to improving the safety of the battery 2.

Optionally, the insulating layer 37 may be formed by coating using processes such as die extrusion coating, micro-gravure coating or gravure coating, which is not limited in the present application.

Further, the insulating layer slurry can be coated on the current collector 36 using a micro-gravure coating process. In this case, step S710 may specifically include: coating a liquid insulating layer slurry on the current collector 36 using a micro-gravure coating process, to form the insulating layer 37 after drying.

In the above solution, compared with the commonly used die extrusion coating process, the use of micro-gravure coating is beneficial to reducing the thickness of the insulating layer 37. In this way, the thickness of the insulating layer 37 covering the end region 3611 on one side of the tab 361 close to the active material layer 38 is reduced, which makes the tab 361 soft and easier to be bent, and is further beneficial to reducing the space for bending the tab in the process of packaging the battery 2 and increasing the volumetric energy density of the battery 2.

Optionally, the method 700 further includes: processing, in the first direction X, the current collector 36 located on one side of the insulating layer 37 away from the active material layer 38 to form a tab 361.

Specifically, in the first direction X, the region on one side of the current collector 36 away from the insulating layer 37 is a bare foil zone, that is, the directly exposed current collector 36, and this exposed current collector 36 is processed to form the tab 361. For example, the current collector 36 can be cut by laser cutting or mechanical cutting, and the current collector 36 except the tab 361 is cut off, so as to form the tab 361.

Optionally, a second edge region 372 of the insulating layer 37 may cover an end region 3611 on one side of the tab 361 close to the active material layer 38.

Optionally, before step S720, the method 700 further includes: coating a conductive layer slurry on the current collector 36 to form a conductive layer 39 after drying. The active material layer 38 completely covers the conductive layer 39.

It should be understood that the order of producing the insulating layer 37 and the conductive layer 39 on the current collector 36 is not limited in the embodiments of the present application. For example, the conductive layer slurry and the insulating layer slurry can be coated on the current collector 36 at the same time according to preset sizes and positions, and the conductive layer 39 and the insulating layer 37 are formed after drying. Alternatively, the conductive layer slurry can be coated on the current collector 36 first to form the conductive layer 39, and then the insulating layer slurry is coated to form the insulating layer 37. Alternatively, the insulating layer slurry can be coated on the current collector 36 first to form the insulating layer 37, and then the conductive layer slurry is be coated to form the conductive layer 39.

Optionally, the conductive layer 39 and the insulating layer 37 can use the same coating process or different coating processes, which is not limited in the present application. The conductive layer 39 can be formed by coating the conductive layer slurry on the current collector 36, for example, using a micro-gravure coating process or a gravure coating process.

Optionally, in the first direction X, a gap is provided between the insulating layer 37 and the conductive layer 39. In this way, when the insulating layer slurry and the conductive layer slurry are coated on the current collector 36 at the same time, mutual interference between the two can be avoided.

An embodiment of the present application further provides an electrode assembly 31, which includes the electrode sheet 311 in the foregoing embodiments.

An embodiment of the present application further provides a battery cell 3, which includes the battery assembly 31 in the foregoing embodiments; a housing 321 having an opening for accommodating the electrode assembly 31; and an end cover 322 for closing the opening.

An embodiment of the present application further provides a battery 2, which includes the battery cell 3 in the foregoing embodiments.

An embodiment of the present application further provides a power consumption device, which includes the battery 2 in the foregoing embodiments, the battery 2 being configured to provide electrical energy.
Although the present application has been described with reference to the preferred embodiments thereof, various modifications can be made thereto without departing from the scope of the present application, and the components therein can be replaced with equivalents. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. An electrode sheet (311), comprising: a current collector (36) as well as an insulating layer (37) and an active material layer (38) located on the current collector (36);
wherein the active material layer (38) and the insulating layer (37) are arranged along a first direction (X) of the current collector (36), and an edge portion (381) on one side of the active material layer (38) close to the insulating layer (37) covers a first edge region (371) of the insulating layer (37).

2. The electrode sheet (311) according to claim 1, wherein in the first direction (X), a tab (361) of the current collector (36) is located on one side of the insulating layer (37) away from the active material layer (38).

3. The electrode sheet (311) according to claim 2, wherein a second edge region (372) of the insulating layer (37) covers an end region (3611) on one side of the tab (361) close to the insulating layer (37).

4. The electrode sheet (311) according to any one of claims 1 to 3, wherein a thickness of the insulating layer (37) ranges from 1µm to 25µm.

5. The electrode sheet (311) according to claim 4, wherein the thickness of the insulating layer (37) ranges from 2µm to 10µm.

6. The electrode sheet (311) according to any one of claims 1 to 5, wherein in the first direction (X), a size of the edge portion (381) ranges from 0 to 5mm.

7. The electrode sheet (311) according to any one of claims 1 to 6, wherein the electrode sheet (311) further comprises a conductive layer (39),
the conductive layer (39) is located between the current collector (36) and the active material layer (38), and the active material layer (38) completely covers the conductive layer (39).

8. The electrode sheet (311) according to claim 7, wherein in the first direction (X), a gap is provided between the conductive layer (39) and the insulating layer (37).

9. The electrode sheet (311) according to claim 8, wherein in the first direction (X), a size of the gap ranges from 0.1mm to 4mm.

10. The electrode sheet (311) according to claim 9, wherein in the first direction (X), the size of the gap ranges from 0.5mm to 1mm.

11. The electrode sheet (311) according to any one of claims 7 to 10, wherein a thickness of the conductive layer (39) ranges from 0.5µm to 2µm.

12. The electrode sheet (311) according to any one of claims 1 to 11, wherein the insulating layer (37) and the active material layer (38) are sequentially formed on the current collector (36) by coating and drying.

13. The electrode sheet (311) according to any one of claims 1 to 12, wherein the insulating layer (37) is formed on the current collector (36) by coating and drying using a micro-gravure coating process.

14. A producing method of an electrode sheet (311), the method comprising:
coating an insulating layer slurry on a current collector (36) to form an insulating layer (37) after drying; and
coating an active material layer slurry on the current collector (36) to form an active material layer (38) after drying, so as to obtain the electrode sheet (311);
wherein the active material layer (38) and the insulating layer (37) are arranged along a first direction (X) of the current collector (36), and an edge portion (381) on one side of the active material layer (38) close to the insulating layer (37) covers a first edge region (371) of the insulating layer (37).

15. The producing method according to claim 14**,** wherein the method further comprises:
processing, in the first direction (X), the current collector (36) located on one side of the insulating layer (37) away from the active material layer (38) to form a tab (361).

16. The producing method according to claim 15, wherein a second edge region (372) of the insulating layer (37) covers an end region (3611) on one side of the tab (361) close to the insulating layer (37).

17. The producing method according to any one of claims 14 to 16, wherein a thickness of the insulating layer (37) ranges from 1µm to 25µm.

18. The producing method according to claim 17, wherein the thickness of the insulating layer (37) ranges from 2µm to 10µm.

19. The producing method according to any one of claims 14 to 18, wherein in the first direction (X), a size of the edge portion (381) ranges from 0 to 5mm.

20. The producing method according to any one of claims 14 to 19, wherein before the coating an active material layer slurry on the current collector (36), the method further comprises:
coating a conductive layer slurry on the current collector (36) to form a conductive layer (39) after drying;
wherein the active material layer (38) completely covers the conductive layer (39).

21. The producing method according to claim 20, wherein in the first direction (X), a gap is provided between the conductive layer (39) and the insulating layer (37).

22. The producing method according to claim 21, wherein in the first direction (X), a size of the gap ranges from 0.1mm to 4mm.

23. The producing method according to claim 22, wherein in the first direction (X), the size of the gap ranges from 0.5mm to 1mm.

24. The producing method according to any one of claims 20 to 23, wherein a thickness of the conductive layer (39) ranges from 0.5µm to 2µm.

25. The producing method according to any one of claims 14 to 24, wherein the coating an insulating layer slurry on a current collector (36) to form an insulating layer (37) after drying, comprises:
coating the insulating layer slurry on the current collector (36) using a micro-gravure coating process, to form the insulating layer (37) after drying.

26. An electrode assembly (31), comprising: the electrode sheet (311) according to any one of claims 1 to 13.

27. A battery cell (3), comprising:
the electrode assembly (31) according to claim 26;
a housing (321) having an opening for accommodating the electrode assembly (31); and
an end cover (322) for closing the opening.

28. A battery (2), comprising:
a plurality of battery cell (3) according to claim 20.

29. A power consumption device, comprising:
the battery (2) according to claim 21, the battery (2) being configured to provide electrical energy.
